# EUROPEAN PATENT APPLICATION

(11) **EP 4 036 751 A1**
(43) Date of publication of application: **03.08.2022**
(21) Application number: 21202610.8
(22) Date of filing: 14.10.2021
(51) Int. Cl.: G06F 16/23, G06F 16/27

(54) **METHOD AND APPARATUS FOR PERFORMING MODIFICATION TASK, ELECTRONIC DEVICE AND READABLE STORAGE MEDIUM**

(30) Priority: 29.01.2021 CN 202110129933
(71) Applicant: BEIJING BAIDU NETCOM SCIENCE AND TECHNOLOGY CO. LTD., 100085 Beijing (CN)
(72) Inventor: WANG, Yifei, Beijing, 100085 (CN); WANG, Yang, Beijing, 100085 (CN); WANG, Yu, Beijing, 100085 (CN)
(74) Representative: dompatent von Kreisler Selting Werner - Partnerschaft von Patent- und Rechtsanwälten mbB

(57) **Abstract**

The present application discloses a method and apparatus for performing a modification task, an electronic device and a readable storage medium, and relates to the fields of deep learning technologies, knowledge graph technologies and big data technologies. An implementation includes: by a configuration center, receiving (S101) and executing (S101) a modification task, and locally storing (S101) modified state data and/or configuration data; generating (S102) a change task according to the modified state data and/or configuration data, and adding (S102) the change task into an asynchronous task queue corresponding to each storage node; receiving (S103) a heartbeat packet sent by the storage node; and taking out (S104) the added change task from the asynchronous task queue corresponding to the storage node, and adding (S104) the taken-out change task into a return message of the heartbeat packet to send the taken-out change task to the storage node. The implementation further includes: by a storage node, sending a heartbeat packet to a configuration center; receiving a return message of a heartbeat packet sent by the configuration center, the return message of the heartbeat packet including a change task; and adding the change task into an asynchronous task receiving queue for sequential execution.

## Description

### Field of the Disclosure

The present application relates to the field of computer technologies, and particularly to a method and apparatus for performing a modification task, an electronic device and a readable storage medium in the fields of deep learning technologies, knowledge graph technologies and big data technologies.

### Background of the Disclosure

A distributed graph database architecture includes a configuration center, a storage cluster and a computing cluster, the storage cluster includes storage nodes, and the computing cluster includes computing nodes.

Data is dispersedly stored in the storage cluster, and a change to a state and/or a configuration of the storage cluster requires the configuration center to distribute a change task to the storage node for execution.

### Summary of the Disclosure

The present application provides a method and apparatus for performing a modification task, an electronic device and a readable storage medium, so as to ensure that a change task generated by a configuration center may be executed by a storage node in sequence, thereby improving accuracy of task distribution and an execution efficiency of the modification task.

According to a first aspect of the present application, there is provided a method for performing a modification task, the method being performed in a configuration center, including: receiving and executing a modification task sent by a user, and locally storing modified state data and/or configuration data; generating a change task according to the modified state data and/or configuration data, and adding the change task into an asynchronous task queue preset by the configuration center and corresponding to each storage node; receiving a heartbeat packet sent by the storage node; and taking out the added change task from the asynchronous task queue corresponding to the storage node, and adding the taken-out change task into a return message of the heartbeat packet to send the taken-out change task to the storage node, such that the storage node adds the change task contained in the return message of the heartbeat packet into an asynchronous task receiving queue preset by the storage node for sequential execution.

According to a second aspect of the present application, there is provided a method for performing a modification task, the method being performed in a storage node, including: sending a heartbeat packet to a configuration center; receiving a return message of a heartbeat packet sent by the configuration center, the return message of the heartbeat packet including a change task, and the change task being generated by the configuration center according to modified state data and/or configuration data; and adding the change task into an asynchronous task receiving queue preset by the storage node for sequential execution.

According to a third aspect of the present application, there is provided an apparatus for performing a modification task, the apparatus being located in a configuration center, including: a modification unit configured to receive and execute a modification task sent by a user, and locally store modified state data and/or configuration data; a generating unit configured to generate a change task according to the modified state data and/or configuration data, and add the change task into an asynchronous task queue preset by the configuration center and corresponding to each storage node; a first receiving unit configured to receive a heartbeat packet sent by the storage node; and a processing unit configured to take out the added change task from the asynchronous task queue corresponding to the storage node, and add the taken-out change task into a return message of the heartbeat packet to send the taken-out change task to the storage node, such that the storage node adds the change task contained in the return message of the heartbeat packet into an asynchronous task receiving queue preset by the storage node for sequential execution.

According to a fourth aspect of the present application, there is provided an apparatus for performing a modification task, the apparatus being located in a storage node, including: a sending unit configured to send a heartbeat packet to a configuration center; a second receiving unit configured to receive a return message of a heartbeat packet sent by the configuration center, the return message of the heartbeat packet including a change task, and the change task being generated by the configuration center according to modified state data and/or configuration data; and an execution unit configured to add the change task into an asynchronous task receiving queue preset by the storage node for sequential execution.

According to a fifth aspect of the present application, there is provided an electronic device, including: at least one processor; and a memory connected with the at least one processor communicatively, wherein the memory stores instructions executable by the at least one processor to enable the at least one processor to perform the method as mentioned above.

According to a sixth aspect of the present application, there is provided a non-transitory computer readable storage medium with computer instructions stored thereon, wherein the computer instructions are used for causing a computer to perform the method as mentioned above.

According to a seventh aspect of the present application, there is provided a computer program product including a computer program which, when executed by a processor, implements the method as mentioned above.

According to the above technical solution of the present application, the asynchronous task queue is set in the configuration center, and the asynchronous task receiving queue is set in the storage node, thus ensuring that the change task generated by the configuration center may be executed by the storage node in sequence, thereby improving the accuracy of task distribution and the execution efficiency of the modification task.

It should be understood that the statements in this section are not intended to identify key or critical features of the embodiments of the present application, nor limit the scope of the present application. Other features of the present application will become apparent from the following description.

### Brief Description of Drawings

The drawings are used for better understanding the present solution and do not constitute a limitation of the present application, wherein
Fig. 1 is a schematic diagram according to a first embodiment of the present application;
Fig. 2 is a schematic diagram according to a second embodiment of the present application;
Fig. 3 is a schematic diagram according to a third embodiment of the present application;
Fig. 4 is a schematic diagram according to a fourth embodiment of the present application; and
Fig. 5 is a block diagram of an electronic device configured to implement the method for performing a modification task according to the embodiments of the present application.

### Detailed Description of Preferred Embodiments

The following part will illustrate exemplary embodiments of the present application with reference to the drawings, including various details of the embodiments of the present application for a better understanding. The embodiments should be regarded only as exemplary ones. Therefore, those skilled in the art should appreciate that various changes or modifications can be made with respect to the embodiments described herein without departing from the scope and spirit of the present application. Similarly, for clarity and conciseness, the descriptions of the known functions and mechanisms are omitted in the descriptions below.

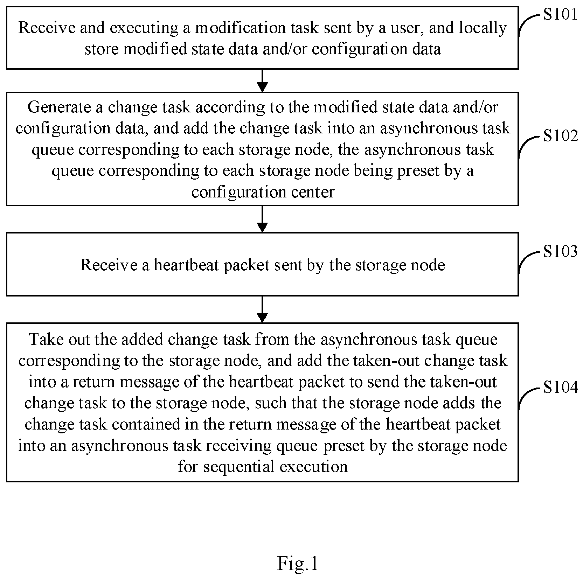

Fig. 1 is a schematic diagram according to a first embodiment of the present application. As shown in Fig. 1, a method for performing a modification task according to the present embodiment is performed in a configuration center, and may specifically include the following steps of:
S101: receiving and executing a modification task sent by a user, and locally storing modified state data and/or configuration data;
S102: generating a change task according to the modified state data and/or configuration data, and adding the change task into an asynchronous task queue preset by the configuration center and corresponding to each storage node;
S103: receiving a heartbeat packet sent by the storage node; and
S104: taking out the added change task from the asynchronous task queue corresponding to the storage node, and adding the taken-out change task into a return message of the heartbeat packet to send the taken-out change task to the storage node, such that the storage node adds the change task contained in the return message of the heartbeat packet into an asynchronous task receiving queue preset by the storage node for sequential execution.

The configuration center serves as a subject for executing the method for performing a modification task according to the present embodiment, and is located in a distributed graph database and configured to manage the storage node included in a storage cluster in the distributed graph database to execute a corresponding task; the asynchronous task queue is set in the configuration center, and the asynchronous task receiving queue is set in the storage node, thus ensuring that the change task generated by the configuration center according to a modification command may be executed by the storage node in sequence, thereby improving accuracy of task distribution.

The modification task sent by the user and received by the configuration center in the present embodiment during execution the step of S101 may be a corresponding command sent by the user to modify a state and/or a configuration of the storage cluster, and the state data and/or the configuration data of the storage cluster may be changed by executing the received modification command.

After executing the step of S 101 of executing the received modification task, the configuration center in the present embodiment locally stores the modified state data and/or configuration data of the storage cluster; that is, the configuration center records the latest state data and the latest configuration data of the storage cluster.

In addition, if failing to successfully execute the modification task, the configuration center in the present embodiment may also return a message of a failed modification to the user, so as to prompt the user that the execution of the modification task fails.

After executing the step of S101 of locally storing the modified state data and/or configuration data, the configuration center in the present embodiment executes the step of S102 of generating the change task according to the modified state data and/or configuration data, and adding the generated change task into the asynchronous task queue corresponding to each storage node; the asynchronous task queue corresponding to each storage node is preset by the configuration center.

In addition, the configuration center in the present embodiment may preset one asynchronous task queue for each storage node; that is, different asynchronous task queues correspond to different storage nodes.

It may be understood that the change task generated by the configuration center in the present embodiment is used for changing the current state and/or configuration of each storage node, such that the changed state and/or configuration of each storage node conforms to the modification task received by the configuration center.

For example, if the modification task received by the configuration center is a task of changing a master node, and specifically, if the modification task is to change a storage node A which is originally the master node to a slave node and change a storage node B which is originally the slave node to the master node, after locally storing the modified state data (the master node is the storage node B, and the slave node is the storage node A), the configuration center generates a change task (to change the storage node B to the master node and change the storage node A to the slave node) according to the modified state data and distributes the change task to each storage node, thereby changing the state of each storage node.

After executing the step of S102 of adding the generated change task into the asynchronous task queue corresponding to each storage node, the configuration center in the present embodiment executes the step of S 103 of receiving the heartbeat packet sent by the storage node. That is, the operation that the configuration center in the present embodiment sends the change task to the storage node is triggered by the storage node sending the heartbeat packet to the configuration center, and the configuration center sends the change task only to the storage node which sends the heartbeat packet.

The heartbeat packet received by the configuration center in the present embodiment during execution of the step of S103 may be a heartbeat packet periodically sent by the storage node, and is used for the storage node to notify the configuration center of its own state.

After executing the step of S103 of receiving the heartbeat packet sent by the storage node, the configuration center in the present embodiment executes the step of S104 of taking out the added change task from the asynchronous task queue corresponding to the storage node, and adding the taken-out change task into the return message of the heartbeat packet to send the taken-out change task to the storage node, such that the storage node adds the change task contained in the return message of the heartbeat packet into the asynchronous task receiving queue preset by the storage node for sequential execution.

Since the storage node may periodically send the heartbeat packet to the configuration center, there may exist a time interval when the configuration center receives each heartbeat packet, and during the time interval, the configuration center may generate a plurality of change tasks. Since change tasks with a same task type may exist in the plural change tasks, in order to improve the accuracy of task distribution and avoid waste of computing resources of the storage node, when the configuration center in the present embodiment executes the step of S104 of taking out the added change task from the asynchronous task queue corresponding to the storage node, an optional implementation which may be adopted includes: determining the task type of each change task added in the asynchronous task queue corresponding to the storage node; and taking out the newly added change task from the change tasks with the corresponding same task type.

In addition, when executing the step of S 104 of taking out the added change task from the asynchronous task queue corresponding to the storage node, the configuration center in the present embodiment may also take out all unexecuted change tasks from the asynchronous task queue.

When the configuration center in the present embodiment executes the step of S104 of adding the taken-out change task to the return message of the heartbeat packet to send the taken-out change task to the storage node, an optional implementation which may be adopted includes: determining the task type of the taken-out change task; and adding the taken-out change task and the task type thereof into the return message of the heartbeat packet to send the taken-out change task and the task type thereof to the storage node.

In an actual scenario, since the storage node is down or has a network error, the change task is unable to be completed, and thus, the storage cluster may have inconsistent states.

In order to avoid the inconsistent states of the storage cluster, the configuration center in the present embodiment may further execute the following steps: generating a report task; adding the generated report task into the asynchronous task queue corresponding to each storage node to send the report task to each storage node, such that each storage node collects state data and/or configuration data of the node; receiving state data and/or configuration data sent by each storage node; and comparing the state data and/or configuration data sent by each storage node with the locally stored state data and/or configuration data, generating a compensation task corresponding to each storage node, and adding the compensation task into the asynchronous task queue corresponding to each storage node, so as to send the compensation task to each storage node, such that each storage node executes the corresponding compensation task to guarantee consistency of the states and/or configurations in the storage cluster.

The configuration center in the present embodiment may generate the report task and add the report task to the asynchronous task queue when the storage node sends the first heartbeat packet, or may periodically generate the report task and add the report task to the asynchronous task queue; and the configuration center may actively send the report task to the storage node, or add the report task in the asynchronous task queue to the return message of the heartbeat packet to send the report task.

That is, the configuration center in the present embodiment may realize the consistency of the states and/or configurations of the storage nodes in the storage cluster by generating the report task.

In the method according to the above-mentioned embodiment, the asynchronous task queue is set in the configuration center, and the asynchronous task receiving queue is set in the storage node, thus ensuring that the change task generated by the configuration center according to the modification command may be executed by the storage node in sequence, thereby improving the accuracy of task distribution and then an execution efficiency of the modification command.

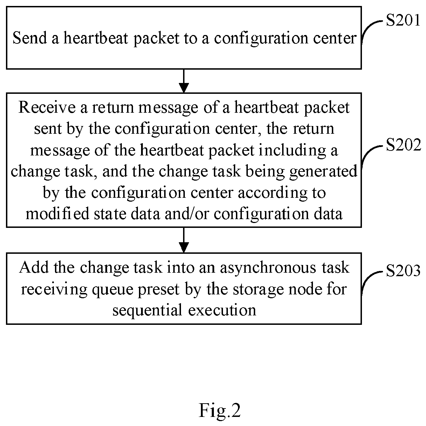

Fig. 2 is a schematic diagram according to a second embodiment of the present application. As shown in Fig. 2, a method for performing a modification task according to the present embodiment is performed in a storage node, and may specifically include the following steps of:
S201: sending a heartbeat packet to a configuration center;
S202: receiving a return message of a heartbeat packet sent by the configuration center, the return message of the heartbeat packet including a change task, and the change task being generated by the configuration center according to modified state data and/or configuration data; and
S203: adding the change task into an asynchronous task receiving queue preset by the storage node for sequential execution.

When executing the step of S201, the storage node in the present embodiment may periodically send the heartbeat packet to the configuration center to notify the configuration center of its own state.

After executing the step of S201 of sending the heartbeat packet to the configuration center, the storage node in the present embodiment executes the step of S202 of receiving the return message of the heartbeat packet sent by the configuration center, the received return message of the heartbeat packet including the change task.

After executing the step of S202 of receiving the return message of the heartbeat packet sent by the configuration center, the storage node in the present embodiment executes S203 of adding the change task into the asynchronous task receiving queue for sequential execution, the asynchronous task receiving queue in the present embodiment being preset by the storage node.

It may be understood that the storage node in the present embodiment may preset the asynchronous task receiving queue to store the change task sent by the configuration center; the storage node may only preset one asynchronous task receiving queue, or set a plurality of asynchronous task receiving queues according to the task type of the change task, thereby improving concurrency of execution of the change task.

When the storage node in the present embodiment executes the step of S203 of adding the change task to the asynchronous task receiving queue for sequential execution, an optional implementation which may be adopted includes: determining the task type of the change task; and adding the change task into the asynchronous task receiving queue corresponding to the task type for sequential execution, the asynchronous task receiving queues corresponding to different task types being preset by the storage node.

The storage node in the present embodiment may further perform the following steps: after receiving the report task sent by the configuration center, acquiring locally stored state data and/or configuration data; and sending the acquired state data and/or configuration data to the configuration center, the sent data being used for comparison by the configuration center to determine whether the state and/or configuration in the storage node is the same as the state and/or configuration of the configuration center.

After sending the acquired state data and/or configuration data to the configuration center, the storage node in the present embodiment may further perform the following steps: receiving a compensation task sent by the configuration center; and adding the received compensation task into the asynchronous task receiving queue for sequential execution.

The compensation task received by the storage node in the present embodiment is used for the storage node to modify state data and/or configuration data of the storage node different from the stored state data and/or configuration data of the configuration center, so as to ensure that the state and/or configuration of the storage node is the same as the state and/or configuration of the configuration center, thereby avoiding a technical problem of asynchronous data caused by incompletion of the change task by the storage node due to its own cause.

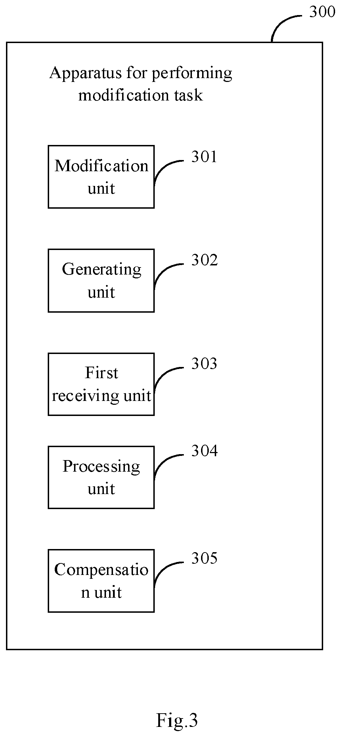

Fig. 3 is a schematic diagram according to a third embodiment of the present application. As shown in Fig. 3, an apparatus 300 for performing a modification task according to the present embodiment is located in a configuration center, and includes:
a modification unit 301 configured to receive and execute a modification task sent by a user, and locally store modified state data and/or configuration data;
a generating unit 302 configured to generate a change task according to the modified state data and/or configuration data, and add the change task into an asynchronous task queue preset by the configuration center and corresponding to each storage node;
a first receiving unit 303 configured to receive a heartbeat packet sent by the storage node; and
a processing unit 304 configured to take out the added change task from the asynchronous task queue corresponding to the storage node, and add the taken-out change task into a return message of the heartbeat packet to send the taken-out change task to the storage node, such that the storage node adds the change task contained in the return message of the heartbeat packet into an asynchronous task receiving queue preset by the storage node for sequential execution.

The modification task received by the modification unit 301 in the present embodiment may be a corresponding command sent by the user to modify a state and/or a configuration of the storage cluster, and the state data and/or the configuration data of the storage cluster may be changed by the modification unit 301 executing the received modification task.

After executing the received modification task, the modification unit 301 in the present embodiment locally stores the modified state data and/or configuration data of the storage cluster; that is, the configuration center records the latest state data and the latest configuration data of the storage cluster.

In addition, if failing to successfully execute the modification task, the modification unit 301 in the present embodiment may also return a message of a failed modification to the user, so as to prompt the user that the execution of the modification task fails.

After locally storing the modified state data and/or configuration data by the modification unit 301, the configuration center in the present embodiment, by the generating unit 302, generates the change task according to the modified state data and/or configuration data, and adds the generated change task into the asynchronous task queue corresponding to each storage node; in the present embodiment, the asynchronous task queue corresponding to each storage node is preset by the configuration center.

It may be understood that the change task generated by the generating unit 302 in the present embodiment is used for changing the current state and/or configuration of each storage node, such that the changed state and/or configuration of each storage node conforms to the modification command received by the configuration center.

After adding the generated change task into the asynchronous task queue corresponding to each storage node by the generating unit 302, the configuration center in the present embodiment receives the heartbeat packet sent by the storage node by the first receiving unit 303.

The heartbeat packet received by the configuration center in the present embodiment by means of the first receiving unit 303 may be a heartbeat packet periodically sent by the storage node, and is used for the storage node to notify the configuration center of its own state.

After receiving the heartbeat packet sent by the storage node by the first receiving unit 303, the configuration center in the present embodiment, by the processing unit 304, takes out the added change task from the asynchronous task queue corresponding to the storage node, and adds the taken-out change task into the return message of the heartbeat packet to send the taken-out change task to the storage node, such that the storage node adds the change task contained in the return message of the heartbeat packet into the asynchronous task receiving queue preset by the storage node for sequential execution.

There exists a time interval when the storage node sends the heartbeat packet to the configuration center, and during the time interval, the configuration center may generate a plurality of change tasks. Since change tasks with a same task type may exist in the plural change tasks, in order to improve the accuracy of task distribution and avoid waste of computing resources of the storage node, when the processing unit 304 in the present embodiment takes out the added change task from the asynchronous task queue corresponding to the storage node, an optional implementation which may be adopted includes: determining the task type of each change task added in the asynchronous task queue corresponding to the storage node; and taking out the newly added change task from the change tasks with the corresponding same task type.

In addition, when taking out the added change task from the asynchronous task queue corresponding to the storage node, the processing unit 304 in the present embodiment may also take out all unexecuted change tasks from the asynchronous task queue.

When the processing unit 304 in the present embodiment adds the taken-out change task to the return message of the heartbeat packet to send the taken-out change task to the storage node, an optional implementation which may be adopted includes: determining the task type of the taken-out change task; and adding the taken-out change task and the task type thereof into the return message of the heartbeat packet to send the taken-out change task and the task type thereof to the storage node.

In an actual scenario, since the storage node is down or has a network error, the change task is unable to be completed, and thus, the storage cluster may have inconsistent states.

In order to avoid the inconsistent states of the storage cluster, the apparatus 300 for performing a modification command according to the present embodiment may further include a compensation unit 305 configured to: generate a report task; add the generated report task into the asynchronous task queue corresponding to each storage node to send the report task to each storage node, such that each storage node collects state data and/or configuration data of the node; receive state data and/or configuration data sent by each storage node; and compare the state data and/or configuration data sent by each storage node with the locally stored state data and/or configuration data, generate a compensation task corresponding to each storage node, and add the compensation task into the asynchronous task queue corresponding to each storage node, so as to send the compensation task to each storage node, such that each storage node executes the corresponding compensation task to guarantee consistency of the states and/or configurations in the storage cluster.

The compensation unit 305 in the present embodiment may generate the report task and add the report task to the asynchronous task queue when the storage node sends the first heartbeat packet, or may periodically generate the report task and add the report task to the asynchronous task queue; and the compensation unit 305 may actively send the report task to the storage node, or add the report task in the asynchronous task queue to the return message of the heartbeat packet to send the report task.

That is, the configuration center in the present embodiment may realize the consistency of the states and/or configurations of the storage nodes in the storage cluster by the compensation unit 305 generating the report task.

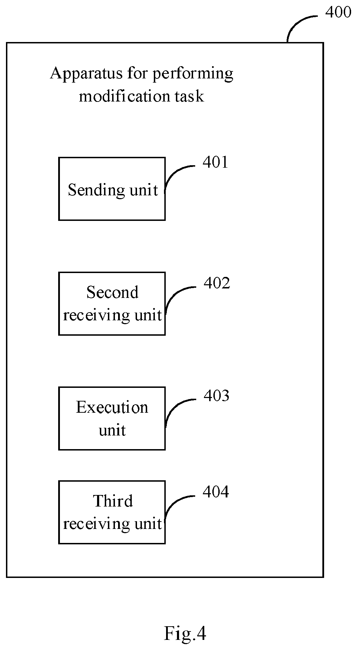

Fig. 4 is a schematic diagram according to a fourth embodiment of the present application. As shown in Fig. 4, an apparatus for performing a modification task according to the present embodiment is located in a storage node, and includes:
a sending unit 401 configured to send a heartbeat packet to a configuration center;
a second receiving unit 402 configured to receive a return message of a heartbeat packet sent by the configuration center, the return message of the heartbeat packet including a change task, and the change task being generated by the configuration center according to modified state data and/or configuration data; and
an execution unit 403 configured to add the change task into an asynchronous task receiving queue preset by the storage node for sequential execution.

The storage node in the present embodiment may periodically send the heartbeat packet to the configuration center by the sending unit 40, so as to notify the configuration center of its own state.

After sending the heartbeat packet to the configuration center by the sending unit 40, the storage node in the present embodiment, by the second receiving unit 402, receives the return message of the heartbeat packet sent by the configuration center, the received return message of the heartbeat packet including the change task.

After receiving the return message of the heartbeat packet sent by the configuration center by the second receiving unit 402, the storage node in the present embodiment adds the change task into the asynchronous task receiving queue for sequential execution by the execution unit 403, the asynchronous task receiving queue in the present embodiment being preset by the storage node.

It may be understood that the storage node in the present embodiment may preset the asynchronous task receiving queue to store the change task sent by the configuration center; the storage node may only preset one asynchronous task receiving queue, or set a plurality of asynchronous task receiving queues according to the task type of the change task, thereby improving concurrency of execution of the change task.

When the storage node in the present embodiment adds the change task to the asynchronous task receiving queue for sequential execution by the execution unit 403, an optional implementation which may be adopted includes: determining the task type of the change task; and adding the change task into the asynchronous task receiving queue corresponding to the task type for sequential execution, the asynchronous task receiving queues corresponding to different task types being preset by the storage node.

The apparatus for performing a modification command located in the storage node according to the present embodiment may further include a third receiving unit 404 configured to: after receiving the report task sent by the configuration center, acquire locally stored state data and/or configuration data; and send the acquired state data and/or configuration data to the configuration center, the sent data being used for comparison by the configuration center to determine whether the state and/or configuration in the storage node is the same as the state and/or configuration of the configuration center.

After sending the acquired state data and/or configuration data to the configuration center by the third receiving unit 404, the storage node in the present embodiment may further perform the following steps: receiving a compensation task sent by the configuration center; and adding the received compensation task into the asynchronous task receiving queue for sequential execution.

The compensation task received by the storage node in the present embodiment by means of the third receiving unit 404 is used for the storage node to modify state data and/or configuration data of the storage node different from the stored state data and/or configuration data of the configuration center, so as to ensure that the state and/or configuration of the storage node is the same as the state and/or configuration of the configuration center, thereby avoiding a technical problem of asynchronous data caused by incompletion of the change task by the storage node due to its own cause.

According to the embodiment of the present application, there are also provided an electronic device, a readable storage medium and a computer program product.

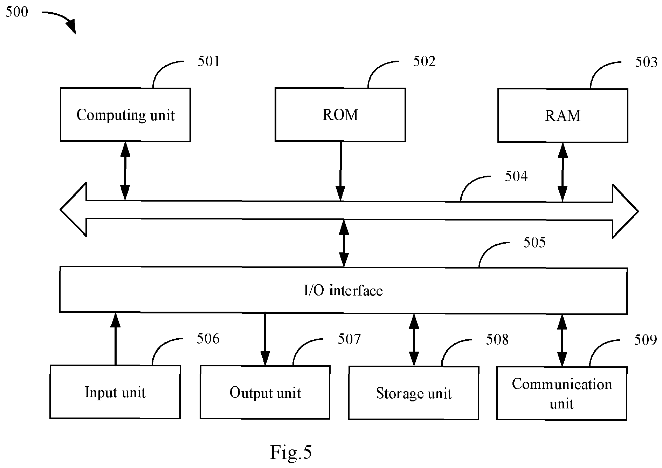

Fig. 5 is a block diagram of an electronic device for the method for performing a modification task according to the embodiment of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital processors, cellular telephones, smart phones, wearable devices, and other similar computing apparatuses. The components shown herein, their connections and relationships, and their functions, are meant to be exemplary only, and are not meant to limit implementation of the present application described and/or claimed herein.

As shown in Fig. 5, the device 500 includes a computing unit 501 which may perform various appropriate actions and processing operations according to a computer program stored in a read only memory (ROM) 502 or a computer program loaded from a storage unit 508 into a random access memory (RAM) 503. Various programs and data necessary for the operation of the device 500 may be also stored in the RAM 503. The computing unit 501, the ROM 502, and the RAM 503 are connected with one other through a bus 504. An input/output (I/O) interface 505 is also connected to the bus 504.

The plural components in the device 500 are connected to the I/O interface 505, and include: an input unit 506, such as a keyboard, a mouse, or the like; an output unit 507, such as various types of displays, speakers, or the like; the storage unit 508, such as a magnetic disk, an optical disk, or the like; and a communication unit 509, such as a network card, a modem, a wireless communication transceiver, or the like. The communication unit 509 allows the device 300 to exchange information/data with other devices through a computer network, such as the Internet, and/or various telecommunication networks.

The computing unit 501 may be a variety of general and/or special purpose processing components with processing and computing capabilities. Some examples of the computing unit 501 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 501 performs the methods and processing operations described above, such as the method for performing a modification task. For example, in some embodiments, the method for performing a modification task may be implemented as a computer software program tangibly contained in a machine readable medium, such as the storage unit 508.

In some embodiments, part or all of the computer program may be loaded and/or installed into the device 500 via the ROM 502 and/or the communication unit 509. When the computer program is loaded into the RAM 503 and executed by the computing unit 501, one or more steps of the task distribution method described above may be performed. Alternatively, in other embodiments, the computing unit 501 may be configured to perform the task distribution method by any other suitable means (for example, by means of firmware).

Various implementations of the systems and technologies described herein may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present application may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present application, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other.

It should be understood that various forms of the flows shown above may be used and reordered, and steps may be added or deleted. For example, the steps described in the present application may be executed in parallel, sequentially, or in different orders, which is not limited herein as long as the desired results of the technical solution disclosed in the present application may be achieved.

The above-mentioned implementations are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for performing a modification task, the method being performed in a configuration center, comprising:
receiving (SI01) and executing (SI01) a modification task sent by a user, and locally storing (S101) modified state data and/or configuration data;
generating (S102) a change task according to the modified state data and/or configuration data, and adding (S102) the change task into an asynchronous task queue preset by the configuration center and corresponding to each storage node;
receiving (S103) a heartbeat packet sent by the storage node; and
taking out (S104) the added change task from the asynchronous task queue corresponding to the storage node, and adding (S104) the taken-out change task into a return message of the heartbeat packet to send the taken-out change task to the storage node, such that the storage node adds the change task contained in the return message of the heartbeat packet into an asynchronous task receiving queue preset by the storage node for sequential execution.

2. The method according to claim 1, wherein the taking out the added change task from the asynchronous task queue corresponding to the storage node comprises:
determining a task type of each change task in the asynchronous task queue corresponding to the storage node; and
taking out the newly added change task from the change tasks with the corresponding same task type.

3. The method according to claim 1, wherein the adding the taken-out change task into a return message of the heartbeat packet to send the taken-out change task to the storage node comprises:
determining the task type of the taken-out change task; and
adding the taken-out change task and the task type thereof into the return message of the heartbeat packet to send the taken-out change task and the task type thereof to the storage node.

4. The method according to claim 1, further comprising:
generating a report task;
adding the report task into the asynchronous task queue corresponding to each storage node to send the report task to each storage node;
receiving state data and/or configuration data sent by each storage node; and
comparing the state data and/or configuration data sent by each storage node with the locally stored state data and/or configuration data, generating a compensation task corresponding to each storage node, and adding the compensation task into the asynchronous task queue corresponding to each storage node, so as to send the compensation task to each storage node.

5. A method for performing a modification task, the method being performed in a storage node, comprising:
sending (S201) a heartbeat packet to a configuration center;
receiving (S202) a return message of a heartbeat packet sent by the configuration center, the return message of the heartbeat packet comprising a change task, and the change task being generated by the configuration center according to modified state data and/or configuration data; and
adding (S203) the change task into an asynchronous task receiving queue preset by the storage node for sequential execution.

6. The method according to claim 5, wherein the adding the change task into an asynchronous task receiving queue for sequential execution comprises:
presetting asynchronous task receiving queues corresponding to different task types;
determining a task type of the change task; and
adding the change task into the asynchronous task receiving queue corresponding to the task type for sequential execution.

7. The method according to claim 5, further comprising:
after receiving a report task sent by the configuration center, acquiring locally stored state data and/or configuration data; and
sending the acquired state data and/or configuration data to the configuration center.

8. The method according to claim 7, further comprising:
after sending the acquired state data and/or configuration data to the configuration center, receiving a compensation task sent by the configuration center; and
adding the compensation task into the asynchronous task receiving queue for sequential execution.

9. An apparatus (300) for performing a modification task, the apparatus being located in a configuration center, comprising:
a modification unit (301) configured to receive and execute a modification task sent by a user, and locally store modified state data and/or configuration data;
a generating unit (302) configured to generate a change task according to the modified state data and/or configuration data, and add the change task into an asynchronous task queue preset by the configuration center and corresponding to each storage node;
a first receiving unit (303) configured to receive a heartbeat packet sent by the storage node; and
a processing unit (304) configured to take out the added change task from the asynchronous task queue corresponding to the storage node, and add the taken-out change task into a return message of the heartbeat packet to send the taken-out change task to the storage node, such that the storage node adds the change task contained in the return message of the heartbeat packet into an asynchronous task receiving queue preset by the storage node for sequential execution.

10. The apparatus (300) according to claim 9, wherein when taking out the added change task from the asynchronous task queue corresponding to the storage node, the processing unit (304) is specifically configured to:
determine a task type of each change task in the asynchronous task queue corresponding to the storage node; and
take out the newly added change task from the change tasks with the corresponding same task type, or
wherein when adding the taken-out change task into a return message of the heartbeat packet to send the taken-out change task to the storage node, the processing unit is specifically configured to:
determine the task type of the taken-out change task; and
add the taken-out change task and the task type thereof into the return message of the heartbeat packet to send the taken-out change task and the task type thereof to the storage node.

11. The apparatus (300) according to claim 9, further comprising a compensation unit (305) configured to:
generate a report task;
add the report task into the asynchronous task queue corresponding to each storage node to send the report task to each storage node;
receive state data and/or configuration data sent by each storage node; and
compare the state data and/or configuration data sent by each storage node with the locally stored state data and/or configuration data, generate a compensation task corresponding to each storage node, and add the compensation task into the asynchronous task queue corresponding to each storage node, so as to send the compensation task to each storage node.

12. An apparatus (400) for performing a modification task, the apparatus being located in a storage node, comprising:
a sending unit (401) configured to send a heartbeat packet to a configuration center;
a second receiving unit (402) configured to receive a return message of a heartbeat packet sent by the configuration center, the return message of the heartbeat packet comprising a change task, and the change task being generated by the configuration center according to modified state data and/or configuration data; and
an execution unit (403) configured to add the change task into an asynchronous task receiving queue preset by the storage node for sequential execution.

13. An electronic device, comprising:
at least one processor; and
a memory connected with the at least one processor communicatively;
wherein the memory stores instructions executable by the at least one processor to enable the at least one processor to perform the method according to any one of claims 1 to 8.

14. A non-transitory computer readable storage medium with computer instructions stored thereon, wherein the computer instructions are used for causing a computer to perform the method according to any one of claims 1 to 8.

15. A computer program product comprising a computer program which, when executed by a processor, implements the method according to any one of claims 1 to 8.
